# EUROPÄISCHE PATENTSCHRIFT

(11) **EP 2 292 513 B1**
(45) Veröffentlichungstag und Bekanntmachung des Hinweises auf die Patenterteilung: **27.06.2012**
(21) Anmeldenummer: 10009257.6
(22) Anmeldetag: 06.09.2010
(51) Int. Cl.: B64C 13/34, F16H 25/24

(54) **Aktuator mit integriertem Zustandsüberwachungssystem sowie Verfahren zur Zustandsüberwachung sowie Verfahren zur Herstellung eines Aktuators**
Actuator with integrated status monitoring system and method for manufacturing same
Actionneur doté d'un système de surveillance d'état intégré et procédé de fabrication d'un actionneur

(30) Priorität: 08.09.2009 DE 102009040344
(43) Veröffentlichungstag der Anmeldung: 09.03.2011
(73) Patentinhaber: Fraunhofer-Gesellschaft zur Förderung der angewandten Forschung e.V., 80686 München (DE)
(72) Erfinder: Biehl, Saskia, 38100 Braunschweig (DE); Ruprecht, Timo, 38106 Braunschweig (DE)
(74) Vertreter: Pfenning, Meinig & Partner GbR

(56) Entgegenhaltungen:
- EP-A1- 1 557 588
- WO-A2-2006/107938
- US-A1- 2006 113 933

## Beschreibung

Die vorliegende Erfindung bezieht sich im Bereich der Luftfahrt und Fahrzeugtechnik, insbesondere im Bereich der Steuerungstechnik, auf einen Aktuator mit integriertem Zustandsüberwachungssystem zur Erkennung und Überwachung von mechanischen Unregelmäßigkeiten einzelner Bauteile des Aktuators und/oder zur Messung einer Lastverteilung an diesem. Desweiteren betrifft die vorliegende Erfindung ein Verfahren zur Zustandsüberwachung des Aktuators sowie ein Verfahren zu dessen Herstellung. Verwendung finden die erfindungsgemäßen Aktuatoren in Stellsystemen im Bereich der Flugsteuerungs- und Fahrzeugsteuerungstechnik sowie im Bereich der Energiegewinnung.

Im Bereich der Flugsteuerungssysteme von Verkehrsflugzeugen stellt die Anwendung elektrohydraulischer Aktuatoren zur Ansteuerung der Ruderflächen noch immer den Stand der Technik dar. Da diese fluidischen Systeme prinzipbedingt einen hohen Aufwand im Bereich der Wartung und der Instandhaltung erzeugen, repräsentieren sie allerdings auch einen wesentlichen Kostentreiber im Rahmen des Flugbetriebs. Zudem sind Defekte an diesen Systemen für einen erheblichen Anteil der unvorhersehbaren Verspätungen, der sog. "unexpected delays", verantwortlich.

Die Entwicklung sowohl im Bereich der Flugsteuerungssysteme im Speziellen als auch anderer Luftfahrzeug- und Fahrzeugsysteme im Allgemeinen geht daher mehr und mehr hin zu einem verstärkten Einsatz elektrischer bzw. elektromechanischer Systeme. Insbesondere die elektromechanischen Stellsysteme, die als Ersatz für die verwendeten elektrohydraulischen Steller eingesetzt werden können, weisen eine erheblich komplexere Konstruktion auf. Diese wiederum führt zu einer höheren Anfälligkeit des Systems gegenüber Fehlern. Die Auswirkung der Fehler reicht von einer einfachen Reduktion des Wirkungsgrads bis hin zu irreversiblen Klemmfällen.

Als elektromechanische Systeme, deren Verhalten dem eines elektrohydraulischen Aktuators entspricht, kommen beispielsweise elektromechanische Aktuatoren zum Einsatz. Solche elektromechanischen Aktuatoren bestehen typischerweise aus einem Elektromotor, dessen Läufer die Mutter einer Kugelumlauf- oder Planetenrollenspindel antreibt, die wiederum die rotatorische Bewegung des Motors in eine translatorische Bewegung der Spindel umsetzt. Zur Übertragung der in den Aktuator eingeleiteten Kräfte dienen Wälzlager verschiedenen Typs. Insbesondere Wälzlager und Spindel sind als tragende Elemente die kritischen mechanischen Bauteile eines elektromechanischen Aktuators.

Weist nun eine der Komponenten des elektromechanischen Aktuators einen unbemerkten Fehler auf, so kann es zu Kraftstößen bzw. Änderungen der Lastverteilung an den einzelnen Komponenten während des Betriebs kommen. Ein weiterer Betrieb der fehlerbehafteten Komponenten kann zu einer Verstärkung des Effektes von Kraftstößen bzw. Lastverteilungsänderungen führen und letztendlich zu einem Versagen des elektromechanischen Aktuators führen.

Kraftstöße lassen sich mit sehr guter Genauigkeit über eine mittels Beschleunigungsaufnehmern durchgeführte Körperschallmessung detektieren, die anschließend durch Methoden der Frequenzanalyse auf charakteristische Muster hin untersucht wird. Diese Sensoren sind jedoch durch ihre hohe Empfindlichkeit auch empfänglich für Störgrößen, die insbesondere beim Einsatz in fahrendem oder fliegendem Gerät vielfältig sind und die Messung der relevanten Größen erschweren. Zudem ist eine Messung der Lastverteilung an internen Komponenten mit diesen Sensoren nicht möglich.

Ausgehend vom Stand der Technik ist es daher die Aufgabe der vorliegenden Erfindung, einen Aktuator zur Verfügung zu stellen, welcher die Probleme der bisher bekannten Aktuatoren löst und welcher in der Lage ist, Fehler, die zu einem kritischen Systemverhalten führen können, möglichst im Frühstadium zu erkennen und die Restlebensdauer des Aktuators zu prognostizieren. Desweiteren ist es die Aufgabe der vorliegenden Erfindung, ein Verfahren zur Zustandsüberwachung eines Aktuators sowie ein Verfahren zu dessen Herstellung zur Verfügung zu stellen.

Diese Aufgabe wird durch den Aktuator mit integriertem Zustandsüberwachungssystem nach Anspruch 1, dem Verfahren zur Zustandsüberwachung nach Anspruch 17, dem Verfahren zur Herstellung eines Aktuators mit integriertem Zustandsüberwachungssystem nach Anspruch 22 sowie dessen Verwendung nach Anspruch 23 gelöst. Vorteilhafte Weiterbildungen sind in den jeweiligen abhängigen Ansprüchen gegeben.

Aus WO 2006/107 938 ist ein Aktuator mit den Merkmalen des Oberbegriff des Anspruchs 1 bekannt.

Erfindungsgemäß weist ein Aktuator mit integriertem Überwachungssystem zur Erkennung und Überwachung von mechanischen Unregelmäßigkeiten einzelner Bauteile des Aktuators und/oder zur Messung einer Lastverteilung an dem Aktuator mindestens zwei gegeneinander bewegbare Komponenten mit jeweils einem ersten und einem zweiten Oberflächenbereich sowie mindestens einen piezoresistiven Sensor als Element des Zustandsüberwachungssystems auf. Die beiden gegeneinander bewegbaren Komponenten sind mit ihrem jeweils ersten Oberflächenbereich so zueinander angeordnet, dass die beiden ersten Oberflächenbereiche zumindest bereichsweise miteinander in Kontakt sind und/oder zumindest bereichsweise oder vollständig durch mindestens eine Zusatzkomponente voneinander beabstandet sind. Zumindest die erste oder die zweite der beiden gegeneinander bewegbaren Komponenten weist in ihrem zweiten Oberflächenbereich den mindestens einen piezoresistiven Sensor auf, wobei dieser, wenn er an der ersten Komponente angeordnet ist, im Lastpfad der ersten Komponente angeordnet ist und, wenn er an der zweiten Komponente angebracht ist, im Lastpfad der zweiten Komponente angeordnet ist.

Als Lastpfad wird der Weg verstanden, entlang dem die Kraft durch den Aktuator läuft. Durch die Positionierung des mindestens einen piezoresistiven Sensors im Lastpfad wird die Messung der Normalkräfte im zweiten Oberflächenbereich der ersten und/oder zweiten Komponente ermöglicht, welche Rückschlüsse auf mechanische Ungleichmäßigkeiten einzelner Bauteile des Aktuators zulässt und/oder die Messung einer Lastverteilung an dem Aktuator möglich macht.

Der mindestens eine piezoresistive Sensor ist also bevorzugt im zweiten Oberflächenbereich der ersten bzw. der zweiten Komponente angeordnet und liegt damit im Lastpfad der ersten bzw. der zweiten Komponente. Der Aktuator kann an zumindest der ersten oder der zweiten Komponente auch mehr als einen Sensor aufweisen, wobei sich die Sensoren im Lastbereich im zweiten Oberflächenbereich der ersten oder der zweiten Komponente befinden. Alternativ kann auch an der ersten und der zweiten Komponente jeweils mindestens ein Sensor angeordnet sein, wobei sich der mindestens eine Sensor der ersten Komponente im zweiten Oberflächenbereich der ersten Komponente und der mindestens eine Sensor der zweiten Komponente in dem zweiten Oberflächenbereich der zweiten Komponente befinden.

Vorzugsweise ist zumindest eine der beiden gegeneinander bewegbaren Komponenten mit ihrem zweiten Oberflächenbereich bereichsweise mit mindestens einem weiteren Element in Kontakt. Das weitere Element ist dabei vorzugsweise mit jeweils der ersten oder der zweiten Komponente fixiert. Zwischen der ersten Komponente und einem ersten weiteren Element und/oder zwischen der zweiten Komponente und einem zweiten weiteren Element entsteht ein Kontaktbereich, welchen vorzugsweise der Kraftfluss durch den Aktuator zumindest bereichsweise kreuzt. Der piezoresistive Sensor ist daher zumindest teilweise im Kontaktbereich zwischen dem zweiten Oberflächenbereich einer der beiden gegeneinander bewegbaren Komponenten und dem weiteren Element angeordnet und dient der Messung von Normalkräften in diesem Bereich.

Generell kann die Positionierung des mindestens einen piezoresistiven Sensors auf der ersten und/oder der zweiten Komponente entsprechend der erwarteten Lastfälle erfolgen, um für jede Belastungsrichtung des Aktuators sensitive Bereiche im jeweiligen Lastpfad zu integrieren.

Kraftstöße oder eine Veränderung der Lastverteilung können zu einem Verpressen des piezoresistiven Sensors zwischen der jeweils ersten oder zweiten Komponente und dem weiteren Element führen. Die so auf den piezoresistiven Sensor übertragen Kräfte können als zur Widerstandsänderung der Sensoren proportionale Spannungssignale aufgezeichnet werden. Fehlerhafte Komponenten eines Aktuators können somit geortet und beobachtet werden. Mit Hilfe des mindestens einen Sensor kann frühzeitig die Notwendigkeit einer Wartung oder eines Austausches des Aktuators angezeigt werden.

Der erfindungsgemäße Aktuator kann beispielsweise eine bewegliche Komponente in Form eines Wälzlagers enthalten. Die erste und zweite Komponente des Aktuators sind in diesem Fall ein Innenring und ein Außenring, welche gegeneinander rotierbar sind. Desweiteren enthält ein Wälzlager als mindestens eine Zusatzkomponente des Aktuators eine Vielzahl an Wälzkörpern, welche zwischen der Außenseite des Innenrings und der Innenseite des Außenrings angeordnet sind. Als Wälzlager kommen beispielsweise Planetenrollenlager, Kugelumlauflager oder Kegellager in Frage. Beispielsweise kann der mechanische Aktuator einen Spindelantrieb mit einem als Spindel ausgebildeten Innenring und einem als Spindelmutter ausgebildeten Außenring, welche durch Wälzkörper, beispielsweise Kugeln, voneinander beabstandet sind, enthalten.

Alternativ kann der Aktuator ein elektromechanischer Aktuator sein, welcher im Gegensatz zum als Wälzlager ausgebildeten mechanischen Aktuator einen zusätzlichen Elektromotor aufweist.

Der ein Wälzlager enthaltende Aktuator kann ein Gehäuse aufweisen, welches den Außenring umgibt, wodurch ein Kontaktbereich zwischen Gehäuse und Außenring entsteht, welcher im Lastpfad des Aktuators liegt. Weiter kann der Aktuator eine Antriebswelle, welche die Funktion eines Innenrings übernimmt, oder einen Übergang zur Antriebswelle, welcher mit dem Innenring fixiert ist, enthalten. Auch zwischen Innenring und Übergang zur Antriebswelle ergibt sich ein Kontaktbereich, welcher zumindest bereichsweise im Kraftfluss durch den Aktuator angeordnet ist.

Der piezoresistive Sensor ist vorzugsweise axial an mindestens einer Schulter bzw. einer Stirnseite des Außenrings, vorzugsweise ganz oder teilweise zwischen der mindestens einen Schulter und dem Gehäuse angeordnet. Alternativ oder zusätzlich kann der Sensor auch axial an der Schulter des Innenrings angeordnet sein, wobei er sich bevorzugt ganz oder teilweise zwischen dem Innenring und dem Übergangselement zur Antriebswelle befindet.

Alternativ oder zusätzlich kann der mindestens eine Sensor auch auf der Außenseite zwischen den Schultern des Außenrings zwischen dem Gehäuse und dem Außenring angeordnet sein. Entsprechend kann der Sensor auf der Innenseite zwischen den Schultern des Innenrings zwischen dem Innenring und dem Übergang zur Antriebswelle angeordnet sein.

Vorzugsweise sind entlang der Stirnseite des Innen- und/oder des Außenrings mehrere Sensoren angeordnet, welche Rückschlüsse auf die Lastverteilung im Aktuator ermöglichen. Die piezoresistiven Sensoren sind dabei vorzugsweise in regelmäßigen Abständen zueinander angeordnet.

In einer besonderen Ausführungsform ist der Innenring als Spindel ausgebildet und der Außenring, welcher mit mindestens einem piezoresistiven Sensor versehen ist, bildet mit den Wälzkörpern eine Spindelmutter.

Prinzipbedingt reagieren piezoresistive Sensoren einerseits auf das Einwirken von äußeren Kräften, andererseits auf Temperaturänderungen mit einer Änderung des elektrischen Widerstandes. Da insbesondere im Fall einer Anwendung im Bereich der Flugsteuerung große Temperaturänderungen auftreten, weist der erfindungsgemäße Aktuator vorzugsweise ein Temperaturkompensationselement als Komponente des Zutandsüberwachungssystems auf. Das Temperaturkomponensationselement ist vorzugsweise außerhalb des Lastpfades insbesondere benachbart zu dem piezoresistiven Sensor angeordnet. Ist der piezoresistive Sensor an der ersten Komponente angeordnet, so liegt das Temperaturkompensationselement bevorzugt im zweiten Bereich der ersten Komponente außerhalb des Lastpfades. Ist der Sensor dagegen an der zweiten Komponente angebracht, so befindet sich das Temperaturkompensationselement entsprechend im zweiten Oberflächenbereich der zweiten Komponente. Durch die Temperaturkomponensation ist es möglich, die auftretenden Kräfte unter konstanten Bedingungen innerhalb des gesamten, während der typischen Flugmission auftretenden Temperaturbereichs zu messen.

Zur messtechnischen Erfassung des Widerstandes wird der mindestens eine piezoresistive Sensor bevorzugt mittels einer geeigneten Konstantspannungsquelle versorgt. Das mindestens eine Temperaturkompensationselement vorzugsweise in Reihe mit dem mindestens einen Sensor geschaltet. Alternativ können zur Verschaltung des Temperaturkompensationselementes und des Sensors auch Brückenschaltungen, insbesondere Wheatstone-Brückenschaltungen, oder eine Parallelschaltung Anwendung finden. Zur eigentlichen Erfassung der Messwerte kann mittels einer zusätzlichen Schaltung ein zur Widerstandsänderung der Sensoren proportionales Spannungssignal abgegriffen werden.

Der erfindungsgemäße Aktuator kann beispielsweise mindestens einen piezoresistiven Sensor, welcher als mindestens ein Sensorpunkt in einer Oberflächenbeschichtung ausgebildet ist, aufweisen. Alternativ kann der mindestens eine piezoresistive Sensor als Beschichtung, welche aus einem piezoresistiven Material besteht oder ein solches Element enthält, geformt sein.

Der Sensorpunkt und/oder die Oberflächenbeschichtung, welche aus einem piezoresistiven Material besteht oder ein solches enthält, kann beispielsweise eine dotierte oder undotierte Kohlenwasserstoffschicht oder eine dotierte oder undotierte amorphe Kohlenstoffschicht sein. Im Fall einer dotierten Kohlenstoffwasserschicht oder einer dotierten Kohlenstoffschicht bieten sich Wolfram, Chrom, Silber, Titan, Gold oder Platin zur Dotierung an.

Das Zustandsüberwachungssystem des erfindungsgemäßen Aktuators weist vorzugsweise Elektroden auf, welche auf der den zweiten Oberflächenflächenbereich einer der Komponenten des Aktuators abgewandten Seite des Sensorpunktes und/oder der Oberflächenbeschichtung angeordnet sind. Die Elektroden sind vorzugsweise mit dem mindestens einem Sensorpunkt und/oder der Oberflächenbeschichtung, welche aus einem piezoresistiven Material besteht oder ein solches enthält, kontaktierbar und mit einer Spannungsquelle, insbesondere mit einer Konstantspannungsquelle, oder mit einer Stromquelle, insbesondere einer Konstantstromquelle, verbindbar sind. Zur Erfassung der Messwerte wird mittels einer zusätzlichen Schaltung ein zur Widerstandsänderung der Sensoren proportionales Spannungssignal abgegriffen. Zudem realisiert diese Schaltung eine entsprechende Konditionierung der analogen Spannungswerte ebenso wie eine Analog-Digital-Wandlung, um sie im Anschluss mit Hilfe geeigneter Verfahren der Signalverarbeitung innerhalb eines Rechnersystems auswerten zu können. Die notwendigen elektronischen Spannungsmodule können dabei direkt in eine Steuerungselektronik des Aktuators integriert werden.

Die Elektroden sind vorzugsweise als dünne Metallschicht ausgebildet. Insbesondere bieten sich Elektroden an, welche aus Chrom, einer Chrom-NickelVerbindung oder Titan bestehen oder zumindest eines dieser Materialien enthalten.

Vorzugsweise bilden jeweils zwei Elektroden, welche zueinander benachbart auf der ein piezorestistives Material enthaltenden oder aus einem solchen bestehenden Oberflächenbeschichtung im zweiten Oberflächenbereich auf einer der Komponenten des Aktuators angeordnet sind, eine Sensorstruktur. Dabei dient eine erste Elektrode der Kraftmessung, eine zweite Elektrode der Temperaturkompensation. Die zur Kraftmessung verwendete erste Elektrode besteht aus einem ersten Bereich, welcher bevorzugt oval ausgebildet ist, und einem zweiten Bereich, welcher bevorzugt quadratisch oder rechteckig ausgebildet ist, wobei der erste und der zweite Bereich miteinander verbunden sind. Der erste Bereich dient der Kraftmessung und ist im Lastpfad angeordnet. Der zweite Bereich dient der Kontaktierung und ist außerhalb des Lastpfades angeordnet.

Die zweite Elektrode ist außerhalb des Lastpfades angebracht und dient gleichzeitig der Messung als auch der Kontaktierung. Vorzugsweise sind jeweils zwei benachbarte Elektroden bzw. je eine solche Sensorstruktur in regelmäßigen Abständen im Bereich des Lastpfades angeordnet, um so die Lastverteilung über zumindest eine der beiden Komponenten des Aktuators zu erhalten.

Vorzugsweise ist der Sensorpunkt oder die Oberflächenbeschichtung sowie die Elektroden durch eine Isolations- und/oder Verschleißschutzschicht vor Einwirkungen der Umgebung und der weiteren Komponente geschützt. Die Isolations- und/oder Verschleißschutzschicht ist bevorzugt aus einer Silizium-dotierten, einer Silizium-Sauerstoff-dotierten, einer Aluminiumdotierten oder einer Aluminiumnitrid-dotierten Kohlenwasserstoffschicht gebildet oder enthält zumindest eines dieser Materialien.

Der mindestens eine piezoresistive Sensor ist über eine elektrische Verbindung mit einer Auswerteeinheit und einer Sensorelektronik verbunden. Die Sensorelektronik schließt bevorzugt auch die Art der Verschaltung der Sensoren miteinander und/oder mit den Temperaturkompensationselementen, beispielsweise in Form einer Reihenschaltung, einer Brückenschaltung, insbesondere einer Wheatstone-Brückenschaltung, oder einer Parallelschaltung, ein. Da es sich bei den während des Betriebs des Aktuators gemessenen Spannungssignalen, bedingt durch dessen Funktionsprinzip und die typischen Fehlercharakteristiken, um periodische Signale handelt, erfolgt die Auswertung der Daten primär durch geeignete Verfahren der Frequenz-, Zeit-Frequenz- bzw. Skalen-Frequenz-Analyse. Da gewisse Klassen mechanischer Fehler auch zu einer Änderung der Lastverteilung an Wälzlagern führen können, wird diese ebenfalls durch geeignete Verfahren ermittelt, und ausgewertet. Dies wird durch die gemeinsame Betrachtung aller an einer Komponente angeordneten, verfügbaren piezoresistiven Sensoren ermöglicht. Das Ergebnis der Signalverarbeitung ist ein Satz spezifischer Signalcharakteristiken, die eine eindeutige Erkennung, Lokalisierung und Klassifizierung auftretender mechanischer Defekte erlauben. Die einzelnen Algorithmen der hier beschriebenen Signalverarbeitungsmethoden werden auf einem Rechnersystem ausgeführt, das vorzugsweise direkt in eine Steuerelektronik des Aktuators integriert ist. Entsprechende Schnittstellen können dabei das Senden des ermittelten Aktuator-Status an die übergeordneten Systeme erlauben.

Die vorliegende Erfindung betrifft weiterhin ein Verfahren zur Erkennung und Überwachung mechanischer Unregelmäßigkeiten einzelner Bauteile eines Aktuators und/oder zur Messung einer Lastverteilung an einem Aktuator. Der Aktuator enthält vorzugsweise zwei Komponenten mit jeweils einem ersten und einem zweiten Oberflächenbereich, wobei die beiden Komponenten sich relativ zueinander bewegen und jeweils mit ihrem ersten Oberflächenbereich so zueinander angeordnet sind, dass die beiden ersten Oberflächenbereiche miteinander zumindest bereichsweise in Kontakt sind und/oder durch mindestens einer Zusatzkomponente voneinander beabstandet sind. Während der relativen Bewegung der beiden Komponenten werden die zumindest auf eine der Komponenten wirkenden Normalkräfte gemessen. Insbesondere werden die auf zumindest eine der Komponenten wirkenden Normalkräfte im Bereich des Lastpfades des Aktuators gemessen.

Nach Messung der elektrischen Signale werden die gemessenen Werte vorzugsweise mittels geeigneter Verfahren der Signalverarbeitung, beispielsweise mittels Frequenz- und/oder Zeit-Frequenz- und/oder Skalen-Frequenz-Analyse, ausgewertet.

Die beiden Komponenten des erfindungsgemäßen Aktuators und ggf. die mindestens eine Zusatzkomponente sind vorzugsweise als Wälzlager mit einem Außenring und einem Innenring sowie Wälzkörpern ausgebildet, wobei vorzugsweise ein Spindelantrieb mit einem Außenring und einem als Spindel ausgebildeten Innenring ausgebildet sind. Ausgehend von einem solchen Aktuator, welcher ggf. einen elektrischen Motor aufweist, werden gemäß dem erfindungsgemäßen Verfahren axial an den Schultern des Außen- und/oder Innenrings die dort wirkenden Normalkräfte gemessen. Insbesondere werden zur Messung der Normalkräfte piezoresistive Sensoren verwendet.

Außerdem betrifft die vorliegende Erfindung ein Verfahren zur Herstellung eines Aktuators mit integriertem Zustandsüberwachungssystem zur Erkennung und Überwachung von mechanischen Unregelmäßigkeiten des Aktuators und/oder zur Messung einer Lastverteilung an diesem Aktuator. Der Aktuator weist mindestens zwei gegeneinander bewegbare Komponenten mit jeweils einem ersten und einem zweiten Oberflächenbereich auf. Zunächst wird zumindest auf einer der beiden Komponenten, insbesondere im zweiten Oberflächenbereich, ein piezoresistiver Sensor angeordnet. Anschließend werden die beiden Komponenten so zueinander angeordnet, dass sie mit ihren beiden ersten Oberflächenbereichen miteinander in Kontakt und/oder durch mindestens eine Zusatzkomponente voneinander beabstandet angeordnet sind.

Als piezoresistiver Sensor kann beispielsweise eine piezoresistive Sensorschicht, welche aus einer dotierten oder undotierten Kohlenwasserstoffschicht besteht oder eine solche enthält, auf zumindest eine der beiden Komponenten des Aktuators aufgebracht werden. Als Dotierungsmaterialien kann die Kohlenwasserstoffschicht beispielsweise Wolfram, Chrom oder Silber enthalten. Nach dem Aufbringen der Sensorschicht auf die mindestens eine Komponente des Aktors werden vorzugsweise strukturierte Elektroden aus einer dünnen Metallschicht, beispielsweise Chrom, auf die Sensorschicht aufgebracht. Abschließend kann eine Isolations- und/oder Verschleißschutzschicht, beispielsweise eine siliziumdotierte Kohlenwasserstoffschicht, auf die Sensorschicht sowie die Elektroden aufgebracht werden.

Der erfindungsgemäße Aktuator mit integriertem Zustandsüberwachungssystem sowie das Verfahren zur Erkennung und/oder Überwachung mechanischer Unregelmäßigkeiten eines Aktuators und zur Messung einer Lastverteilung an einem Aktuator werden vorzugsweise in Steuerungs- und/oder Stellsystemen von Fahrzeugen, insbesondere Luftfahrzeugen, verwendet. Beispielsweise kann der erfindungsgemäße Aktuator sowie das erfindungsgemäße Verfahren zur Steuerung von Querrudern, Seitenrudern, Höhenrudern, Hochauftriebssystemen, Spoilern, Fahrwerken, Türöffnern, Frachtraumtüren (Cargobay), Schwenkflügeln, Canards sowie für zyklische oder kollektive Blattverstellungen bei Hubschraubern eingesetzt werden. Alternativ können der erfindungsgemäße Aktuator sowie das erfindungsgemäße Verfahren auch im Bereich der Energiegewinnung, beispielsweise auch bei Blattverstellungen von Windkraftanlagen oder der Verstellung von Solarpanelen verwendet werden.

Nachfolgend soll anhand der Figuren der erfindungsgemäße Gegenstand näher erläutert werden, ohne diesen auf die hier gezeigten speziellen Ausführungsformen einschränken zu wollen. Es zeigen
- Figur 1: einen Ausschnitt eines Wälzlagers im Querschnitt;
- Figur 2: den Schichtaufbau einer Sensorstruktur;
- Figur 3: einen Außenring mit piezoresistiven Sen- soren sowie Temperaturkompensationsele- menten; und
- Figur 4: einen Querschnitt durch ein Spindelgewin- de mit Darstellung des Kraftflusses.

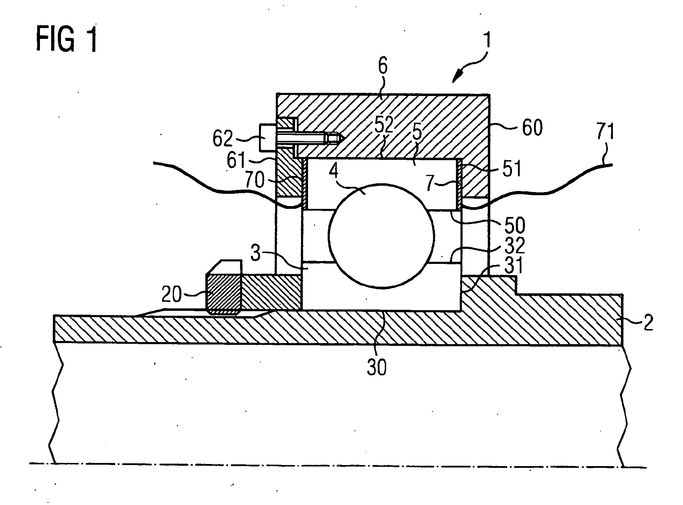

Figur 1 zeigt einen Ausschnitt eines Querschnitts eines Wälzlagers 1. Auf einer Antriebswelle 2 ist ein Innenring 3 fixiert. Der Innenring 3 weist eine der Antriebswelle 2 zugewandte Innenseite 30, zwei Stirnseiten bzw. Schultern 31 sowie eine der Antriebswelle 2 abgewandte und einem Wälzkörper 4 zugewandte Außenseite mit einer Aussparung für den Wälzkörper 4. Der Innenring 3 ist zwischen einer Hinterschneidung der Antriebswelle 2 sowie einem Klemmbolzen 20 eingespannt und gegenüber der Antriebswelle 2 fixiert.

Der Innenring 3 und die Wälzkörper 4 sind von einem Außenring 5 umgeben, wobei der Außenring 5 gegenüber einem Gehäuse 6 fixiert ist. Der Außenring weist eine dem Wälzkörper 4 und dem Innenring 3 zugewandte Innenseite 50 mit einer Aussparung für den Wälzkörper 4 auf. Die Innenseite 50 des Außenrings 5 entspricht einem ersten Bereich des Außenrings 5. Außerdem weist der Außenring 5 zwei Stirnseiten 51 sowie eine dem Wälzkörper 4 abgewandte Seite 52 auf. Die Stirnseiten bzw. Schultern 51 und die Außenseite 52 des Außenrings 5 bilden den zweiten Bereich des Außenrings 5.

Der Außenring 5 ist bereichsweise mit seinen Stirnseiten 51 zwischen einem Hauptteil 60 und einem beweglichen Klemmteil 61 des Gehäuses 6 eingespannt. Das Klemmteil 61 ist mit Hilfe einer Schraube 62 so verschraubt, dass die Stirnseiten 51 des Außenrings eingespannt sind. Der Außenring 5 weist an seinen Schultern 51 jeweils ein piezoresistiven Sensor 7, welcher als Sensorschicht ausgebildet ist, auf, welcher teils im Kontaktbereich zwischen den Stirnseiten 51 des Außenrings 5 und dem Gehäusehauptteil 60 sowie dem Gehäuseklemmteil 61 angeordnet ist. Ein Teil der Sensorschicht 7 ist auf einem nicht-eingespannten Bereich der Stirnseite 51 angeordnet. Die Sensorschicht 7 ist mit Hilfe einer elektrischen Leitung 71 mit einer Auswerteeinheit (nicht dargestellt) verbunden.

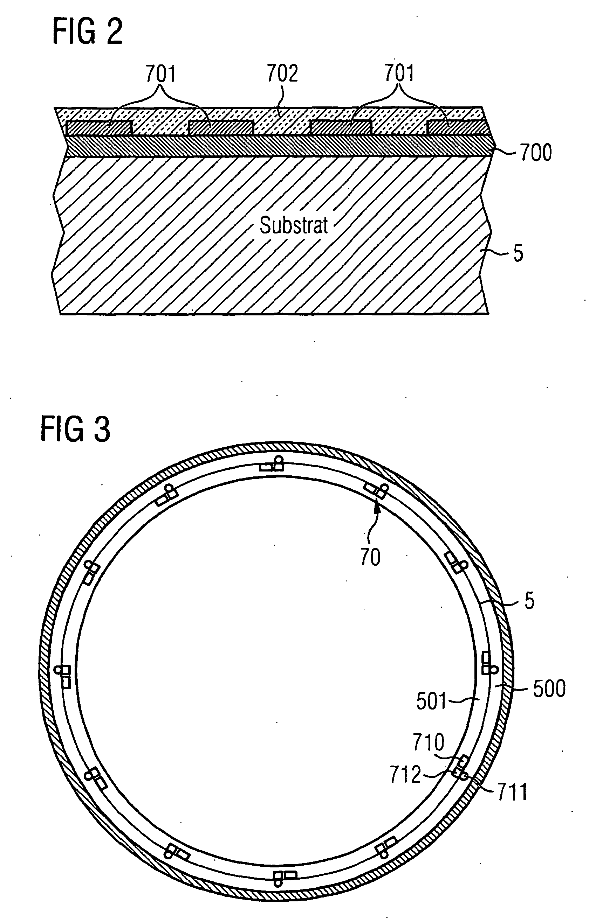

Figur 2 zeigt nun die Sensorschicht 7, welche auf einem Substrat, beispielsweise einem Außenring 5, aufgebracht ist. Die Sensorschicht 7 weist eine piezoresistive Sensorschicht 700 auf. Die Sensorschicht 700 ist entweder eine reine Kohlenstoffschicht oder eine Kohlenstoffschicht, welche mit einem Metall, beispielsweise Wolfram, Chrom oder Silber, dotiert ist. Auf der piezoresistiven Sensorschicht 700 sind strukturierte Elektroden 701 zur Kraftmessung und zur Temperaturkompensation sowie zur Kontaktierung angeordnet. Die Elektroden 701 sind als dünne Metallschicht aus Chrom ausgebildet. Als Isolations- und Verschleißschutz ist auf die piezoresistive Sensorschicht 700 eine siliziumdotierte Kohlenwasserstoffschicht 702 aufgebracht. Bei diesem Schichtsystem 7 haben alle Sensorpunkte dieselbe Masse.

Figur 3 zeigt einen Außenring 5, welcher in regelmäßigen Abständen Sensorstrukturen 70 aufweist. Die Sensorstrukturen 70 sind als Strukturpaare aus einem Viereck 710 und einer kombinierten Struktur 711, 712 aufgebaut. Das Viereck 710 liegt außerhalb des Lastbereiches 500 und dient der Temperaturkompensation. Von der kombinierten Struktur liegt der runde Bereich 711 im Kraftschluss, d.h. im Lastbereich 500, während der viereckige Bereich 712 der Ankontaktierung dient. Die beiden Strukturen, d.h. das Viereck 710 der Temperaturkompensation und die kombinierte Struktur 711, 712 sind in Reihe miteinander geschaltet. Das hat den Vorteil, dass unabhängig von der Temperatur diese Anordnung einen idealen Spannungsteiler darstellt. Über eine solche Anordnung der Sensorstrukturen 70 kann die Lastverteilung über den Lagerring 5 gemessen werden.

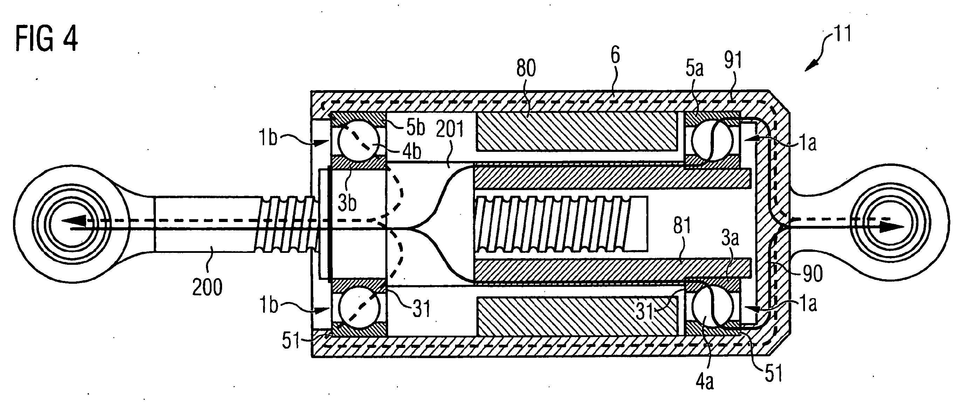

Figur 4 zeigt einen Ausschnitt eines Elektromotors 11. Dieser weist eine Spindel 200 sowie einen Spindeltrieb 201 auf. Der Spindeltrieb 201 ist an seinem ersten Ende mit einem Rotor 81, welcher mit einem Innenring 3a eines ersten Lagers 1a fixiert ist, verbunden. An seinem zweiten Ende ist der Spindeltrieb 201 mit einem Innenring 3b eines zweiten Lagers 1b fixiert. Durch Wälzkörper 4a vom Innenring 3a beabstandet ist ein Außenring 5a, welcher gegenüber einem Gehäuse 6 fixiert ist, angeordnet. Entsprechend ist ein Außenring 5b des zweiten Lagers 1b durch Wälzkörper 4b vom Innenring 3b beabstandet und gegenüber dem Gehäuse 6 fixiert angeordnet. Das Gehäuse 6 ist mit einem Stator 80 verbunden, so dass das Gehäuse 6 stets in Ruhe bleibt.

An den Stirnseiten 31 und 51 der Innenringe 3a, 3b und der Außenringe 5a, 5b des ersten und des zweiten Lagers 1a, 1b sind piezoresistive Sensorschichten angeordnet.

Wird nun der Rotor 81 durch ein externes wechselndes Magnetfeld oder eine entsprechende Umpolung des Stators 80 in eine entsprechende Richtung rotiert, so bewegt der Spindeltrieb 201 die Spindel 200, welche so befestigt ist, dass sie sich nicht um ihre eigene Achse dreht, aus dem Gehäuse heraus. Wird der Rotor in die entgegen gesetzte Richtung rotiert, so bewirkt die Rotation des Spindeltriebs 201 eine Bewegung der Spindel 200 in Richtung des Gehäuses 6.

Unabhängig von der Bewegungsrichtung der Spindel können sowohl ziehende als auch drückende Kräfte über die Spindel in den Aktuator eingeleitet werden. Dabei ist eine drückende Kraft derart orientiert, dass ihre Wirkrichtung längs der Spindel zum Gehäuse 6 weist. Der dabei entstehende Kraftfluss durch den Motor 11 ist mit der Bezugszahl 90 bezeichnet. Hingegen weist die Wirklinie einer ziehenden Kraft längs der Spindel vom Gehäuse weg. Der diesem Lastfall entsprechende Kraftfluss durch den Motor 11 ist mit der Bezugszahl 91 bezeichnet.

Unabhängig von der jeweiligen Kombination aus Belastungsfall und Bewegungsrichtung, die beim Betrieb des Aktuators auftreten können, ist es wichtig, dass die Lager 1a, 1b keine Fehler aufweisen, um einen reibungsarmen Betrieb zu Gewährleisten. Die Funktionstüchtigkeit der Lager wird erfindungsgemäß durch den Einsatz von piezoresistiven Sensoren kontrolliert.

Die hier beschriebenen, piezoresistiven Kraftsensoren sollen eine Messung der Lastverteilung an den im Aktuator verbauten Wälzlagern ermöglichen, sowie die Messung der durch Fehlstellen an Lagern bzw. Spindel erzeugten Kraftstöße erlauben. Zu diesem Zweck werden sie direkt in den Lastpfad des Aktuators integriert und erlauben somit eine Messung die sehr viel dichter an den betroffenen Bauteilen erfolgt als es mittels einer Körperschallmessung möglich ist. Durch die Anordnung direkt im Lastpfad können die Auswirkungen von Schadstellen sowohl an den Lagern als auch an den Spindeln erfasst werden.

## Patentansprüche

1. Aktuator mit integriertem Zustandsüberwachungssystem zur Erkennung und Überwachung von mechanischen Ungleichmäßigkeiten einzelner Bauteile des Aktuators und/oder zur Messung einer Lastverteilung (90, 91) an diesen, wobei der Aktuator mindestens zwei, gegeneinander bewegbare Komponenten (3, 5) mit jeweils einem ersten und einem zweiten (31, 51) Oberflächenbereich enthält, wobei die beiden Komponenten (3, 5) jeweils mit ihrem ersten Oberflächenbereich so zueinander angeordnet sind, dass die beiden ersten Oberflächenbereiche miteinander in Kontakt oder durch mindestens eine Zusatzkomponente voneinander beabstandet sind, wobei
der zweite Oberflächenbereich (31, 51) zumindest einer der beiden Komponenten (3, 5) mindestens einen piezoresistiven Sensor (7) als Element des Zustandsüberwachungssystems aufweist, **dadurch gekennzeichnet, dass**
der mindestens eine piezoresistive Sensor (7) im Lastpfad zumindest einer der beiden Komponenten (3, 5) angeordnet ist.

2. Aktuator nach dem vorhergehenden Anspruch, **dadurch gekennzeichnet, dass** der Aktuator zwei oder mehr piezoresistive Sensoren (7) aufweist.

3. Aktuator nach einem der vorhergehenden Ansprüche, **dadurch gekennzeichnet, dass** der zweite Oberflächenbereich (31, 51) zumindest einer der beiden Komponenten (3, 5) zumindest bereichsweise mit mindestens einem weiteren Element in Kontakt ist, wobei der piezoresistive Sensor (7) zumindest teilweise im Kontaktbereich zwischen dem zweiten Oberflächenbereich (31, 51) und dem weiteren Element angeordnet ist.

4. Aktuator nach einem der vorhergehenden Ansprüche, **dadurch gekennzeichnet, dass** die mindestens zwei Komponenten (3, 5) des Aktuators ein Innenring (3) und ein Außenring (5) eines Wälzlagers (1) sind, welche gegeneinander rotierbar sind, und die mindestens eine Zusatzkomponente des Aktuators eine Vielzahl an Wälzkörpern (4), welche zwischen Innenring (3) und Außenring (5) angeordnet sind, ist.

5. Aktuator nach dem vorhergehenden Anspruch, **dadurch gekennzeichnet, dass** der piezoresistive Sensor (7) axial an mindestens einer der Schultern des Außenrings (51), insbesondere ganz oder teilweise zwischen mindestens einer der Schultern (51) und einem Gehäuse (6), und/oder axial an mindestens einer der Schultern des Innenrings (31), insbesondere ganz oder teilweise zwischen mindestens einer der Schultern des Innenrings (31) und einer Antriebswelle (2) oder einem Übergangselement zur Antriebswelle (2), angeordnet ist.

6. Aktuator nach einem der Ansprüche 4 oder 5, **dadurch gekennzeichnet, dass** mindestens eine der Schultern des Außenrings (51) und/oder des Innenrings (31) vorteilhafterweise längs der Umfangsrichtung des Außenrings (5) und/oder des Innenrings (3), vorteilhafterweise in regelmäßigen Abständen piezoresistiven Sensoren (7) aufweisen.

7. Aktuator nach einem der Ansprüche 4 bis 6, **dadurch gekennzeichnet, dass** der Innenring (3) als Spindel (200) ausgebildet ist und der Außenring (5) mit dem piezoresistiven Sensor (7) eine Spindelmutter bildet.

8. Aktuator nach einem der vorhergehenden Ansprüche, **dadurch gekennzeichnet, dass** das Zustandsüberwachungssystem mindestens ein Temperaturkompensationselement, welches insbesondere außerhalb des Lastpfades (500) bevorzugt im zweiten Oberflächenbereich (31, 51) mindestens einer der Komponenten des Aktuators, bevorzugt im Bereich des piezoresistiven Sensors (7) oder zu diesem benachbart, angeordnet ist, enthält.

9. Aktuator nach einem der vorhergehenden Ansprüche, **dadurch gekennzeichnet, dass** der mindestens eine piezoresistive Sensor (7) und das mindestens eine Temperaturkompensationselement so geschaltet sind, dass sie eine Reihenschaltung oder eine Brückenschaltung, insbesondere eine Wheatstone-Brückenschaltung, bilden.

10. Aktuator nach einem der vorhergehenden Ansprüche, **dadurch gekennzeichnet, dass** der mindestens eine piezoresistive Sensor (7) als mindestens ein Sensorpunkt in einer Oberflächenbeschichtung (700) ausgebildet ist oder, dass der mindestens eine piezoresistive Sensor (7) eine Oberflächenbeschichtung (700), welche aus einem piezoresistiven Material besteht oder ein solches enthält, ist.

11. Aktuator nach dem vorhergehenden Anspruch, **dadurch gekennzeichnet, dass** der Sensorpunkt und/oder die Oberflächenbeschichtung (700), welche aus einem piezoresistiven Material besteht oder ein solches enthält, eine dotierte oder undotierte Kohlenwasserstoffschicht ist, welche gegebenenfalls mit Wolfram, Chrom, Silber, Titan, Gold oder Platin dotiert ist.

12. Aktuator nach einem der Ansprüche 10 oder 11, **dadurch gekennzeichnet, dass** der piezoresistive Sensor (7), insbesondere auf der dem zweiten Oberflächenbereich (31, 51) einer der Komponenten des Aktuators abgewandten Seite des Sensorpunktes und/oder der Oberflächenbeschichtung (700), Elektroden (701) aufweist, mit welchen der mindestens eine Sensorpunkt und/oder die Oberflächenbeschichtung (700), welche aus einem piezoresistiven Material besteht oder ein solches enthält, kontaktierbar und mit einer Spannungsquelle, insbesondere einer Konstantspannungsquelle, oder mit einer Stromquelle, insbesondere einer Konstantstromquelle, verbindbar sind.

13. Aktuator nach dem vorhergehenden Anspruch, **dadurch gekennzeichnet, dass** die Elektroden (701) als dünne Metallschicht, welche bevorzugt aus Chrom, Chrom-Nickel-Verbindungen oder Titan besteht oder zumindest eines dieser Materialien enthält, ausgebildet sind.

14. Aktuator nach einem der Ansprüche 12 oder 13, **dadurch gekennzeichnet, dass** jeweils zwei Elektroden (701) zueinander benachbart angeordnet sind, wobei eine erst Elektrode, welche einen ersten Bereich zur Kraftmessung und einen zweiten Bereich zur Kontaktierung aufweist, mit dem ersten Bereich im Lastpfad (500) und mit dem zweiten Bereich außerhalb des Lastpfades angeordnet ist und eine zweite Elektrode zur Temperaturkompensation außerhalb des Lastpfades angeordnet sind.

15. Aktuator nach einem der vorhergehenden Ansprüche, **dadurch gekennzeichnet, dass** bereichsweise auf der dem zweiten Oberflächenbereich (31, 51) einer der Komponenten des Aktuators abgewandten Seite des Sensorpunktes und/oder der Oberflächenbeschichtung und auf den darauf angeordneten Elektroden (701) eine Isolations- und/oder Verschleißschutzschicht (702) angeordnet ist, wobei die Isolations- und/oder Verschleißschutzschicht (702) bevorzugt aus einer Silizium-dotierten, einer Silizium-Sauerstoff-dotierten, einer Aluminium-dotierten oder einer Aluminiumnitrid-dotierten Kohlenwasserstoffschicht besteht oder eine solche enthält.

16. Aktuator nach einem der vorhergehenden Ansprüche, **dadurch gekennzeichnet, dass** der mindestens eine piezoresistive Sensor (7) über eine elektrische Verbindung mit einer Auswerteeinheit und einer Sensorelektronik verbunden ist.

17. Verfahren zur Erkennung und Überwachung mechanischer Ungleichmäßigkeiten einzelner Bauteile eines Aktuators gemäß einem der Ansprüche 1-16 und/oder zur Messung einer Lastverteilung an diesen, wobei der Aktuator mindestens zwei Komponenten (3, 5) mit jeweils einem ersten und einem zweiten (31, 51) Oberflächenbereich enthält, wobei die beiden Komponenten (3, 5) sich relativ zueinander bewegen und jeweils mit ihrem ersten Oberflächenbereich so zueinander angeordnet sind, dass die beiden ersten Oberflächenbereiche miteinander zumindest bereichsweise in Kontakt oder durch mindestens eine Zusatzkomponente voneinander beabstandet sind,
**dadurch gekennzeichnet, dass**
die während der relativen Bewegung der beiden Komponenten (3, 5) auf zumindest eine der Komponenten (3, 5) wirkenden Normalkräfte gemessen werden.

18. Verfahren nach dem vorhergehenden Anspruch, **dadurch gekennzeichnet, dass** die im Bereich des Lastpfades (500) auf die zumindest eine der Komponenten (3, 5) wirkenden Normalkräfte gemessen werden.

19. Verfahren nach einem der Ansprüche 17 oder 18, **dadurch gekennzeichnet, dass** die gemessenen Werte mittels geeigneter Verfahren der Signalverarbeitung, insbesondere mittels Frequenz- und/oder mittels Zeit-Frequenz- und/oder mittels Skalen-Frequenz-Analyse, ausgewertet werden.

20. Verfahren nach einem der Ansprüche 17 bis 19, **dadurch gekennzeichnet, dass** die beiden Komponenten des Aktuators (3, 5) und gegebenenfalls die mindestens eine Zusatzkomponente ein Wälzlager (1) mit einem Außen- und einem Innenring (3, 5) sowie Wälzkörpern (4), vorzugsweise einen Spindelantrieb (201) mit einem Außenring (5) und einem als Spindel (200) ausgebildeten Innenring (3), ausbilden und die axial an den Schultern des Außen- und/oder Innenrings (51, 31) wirkenden Normalkräfte gemessen werden.

21. Verfahren nach einem der Ansprüche 17 bis 20, **dadurch gekennzeichnet, dass** die Normalkräfte mittels eines piezoresistiven Sensors (7) gemessen werden.

22. Verfahren zur Herstellung eines Aktuator mit integriertem Zustandsüberwachungssystem gemäß einem der Ansprüche 1-16, wobei der Aktuator mindestens zwei, gegeneinander bewegbare Komponenten (3, 5) mit jeweils einem ersten und einem zweiten (31, 51) Oberflächenbereich enthält, wobei die beiden Komponenten (3, 5) jeweils mit ihrem ersten Oberflächenbereich so zueinander angeordnet sind, dass die beiden ersten Oberflächenbereiche miteinander in Kontakt oder durch mindestens eine Zusatzkomponente voneinander beabstandet sind,
**dadurch gekennzeichnet, dass**
auf zumindest einer der beiden Komponenten (3, 5) in ihrem zweiten Oberflächenbereich (31, 51) ein piezoresistiven Sensor (7) angebracht wird.

23. Verwendung eines Aktuators mit integriertem Zustansüberwachungssystem nach einem der Ansprüche 1 bis 16 und des Verfahrens zur Erkennung und Überwachung mechanischer Ungleichmäßigkeiten eines Aktuators und zur Messung einer Lastverteilung an diesen nach Anspruch 17 in Steuerungs- und Stellsystemen, insbesondere in Flugsteuerungssystemen von Luftfahrzeugen, im Bereich der Fahrzeugsteuerung und/oder im Bereich der Energiegewinnung.

## Claims

1. Actuator comprising an integrated condition monitoring system for detecting and monitoring mechanical irregularities of individual components of the actuator and/or for measuring a load distribution (90, 91) thereon, the actuator containing at least two components (3, 5) which are movable in relation to one another, each having a first and a second (31, 51) surface region, the two components (3, 5) being arranged relative to one another with the respective first surface region thereof in such a way that the two first surface regions are in contact with one another or are separated from one another by at least one additional component, the second surface region (31, 51) of at least one of the two components (3, 5) having at least one piezoresistive sensor (7) as an element of the condition monitoring system, **characterised in that** the at least one piezoresistive sensor (7) is arranged in the load path of at least one of the two components (3, 5).

2. Actuator according to the preceding claim, **characterised in that** the actuator has two or more piezoresistive sensors (7).

3. Actuator according to any one of the preceding claims, **characterised in that** the second surface region (31, 51) of at least one of the two components (3, 5) is in contact at least in some regions with at least one further element, the piezoresistive sensor (7) being arranged at least in part in the contact region between the second surface region (31, 51) and the further element.

4. Actuator according to any one of the preceding claims, **characterised in that** the at least two components (3, 5) of the actuator are an inner race (3) and an outer race (5) of a roller bearing (1) which are rotational in relation to one another, and the at least one additional component of the actuator is a plurality of rolling elements (4) which are arranged between the inner race (3) and the outer race (5).

5. Actuator according to the preceding claim, **characterised in that** the piezoresistive sensor (7) is arranged axially on at least one of the shoulders of the outer race (51), in particular in full or in part between at least one of the shoulders (51) and a housing (6), and/or axially on at least one of the shoulders of the inner race (31), in particular in full or in part between at least one of the shoulders of the inner race (31) and a drive shaft (2) or a transition element to the drive shaft (2).

6. Actuator according to either claim 4 or claim 5, **characterised in that** at least one of the shoulders of the outer race (51) and/or of the inner race (31) advantageously comprises piezoresistive sensors (7) in the circumferential direction of the outer race (5) and/or of the inner race (3), which sensors are advantageously arranged at regular intervals.

7. Actuator according to any one of claims 4 to 6, **characterised in that** the inner race (3) is formed as a spindle (200) and the outer race (5) forms a spindle nut with the piezoresistive sensor (7).

8. Actuator according to any one of the preceding claims, **characterised in that** the condition monitoring system contains at least one temperature compensation element, which is arranged in particular outside the load path (500), preferably in the second surface region (31, 51) of at least one of the components of the actuator, preferably in the region of the piezoresistive sensor (7) or adjacent thereto.

9. Actuator according to any one of the preceding claims, **characterised in that** the at least one piezoresistive sensor (7) and the at least one temperature compensation element are connected in such a way that they form a series circuit or a bridge circuit, in particular a Wheatstone bridge circuit.

10. Actuator according to any one of the preceding claims, **characterised in that** the at least one piezoresistive sensor (7) is formed as at least one sensor point in a surface coating (700), or **in that** the at least one piezoresistive sensor (7) is a surface coating, which consists of a piezoresistive material or contains a material of this type.

11. Actuator according to the preceding claim, **characterised in that** the sensor point and/or the surface coating (700), which consists of a piezoresistive material or contains a material of this type, is a doped or undoped hydrocarbon layer, which is optionally doped with tungsten, chromium, silver, titanium, gold or platinum.

12. Actuator according to either claim 10 or claim 11, **characterised in that** the piezoresistive sensor (7), in particular on the side of the sensor point and/or of the surface coating (700) facing away from the second surface region (31, 51) of one of the components of the actuator, has electrodes (701), by means of which the at least one sensor point and/or the surface coating (700), which consists of a piezoresistive material or contains a material of this type, can be placed in contact and can be connected to a voltage source, in particular a constant voltage source, or to a current source, in particular a constant current source.

13. Actuator according to the preceding claim, **characterised in that** the electrodes (701) are formed as a thin metal layer which preferably consists of chromium, chromium-nickel compounds or titanium or contains at least one of these materials.

14. Actuator according to either claim 12 or claim 13, **characterised in that** each two electrodes are arranged so as to be adjacent to one another, a first electrode, which has a first region for force measurement and a second region for bonding, being arranged having the first region in the load path (500) and having the second region outside the load path, and a second electrode for temperature compensation being arranged outside the load path.

15. Actuator according to any one of the preceding claims, **characterised in that** an insulation and/or anti-wear layer (702) is arranged in some regions on the side of the sensor point and/or of the surface coating that faces away from the second surface region (31, 51) of one of the components of the actuator and on the electrodes (701) arranged thereon, the insulation and/or anti-wear layer (702) preferably consisting of or containing a hydrocarbon layer doped with silicon, silicon-oxygen, aluminium or aluminium nitride.

16. Actuator according to any one of the preceding claims, **characterised in that** the at least one piezoresistive sensor (7) is connected to an evaluation unit and sensor electronics via an electrical connection.

17. Method for detecting and monitoring mechanical irregularities of individual components of an actuator according to any one of claims 1 to 16 and/or for measuring a load distribution thereon, the actuator containing at least two components (3, 5), each having a first and a second (31, 51) surface region, the two components moving relative to one another and, together with the respective first surface region thereof, being arranged relative to one another in such a way that the two first surface regions are in contact with one another at least in some regions or are separated from one another by at least one additional component, **characterised in that** the normal forces acting on at least one of the components (3, 5) during the relative movement of the two components (3, 5) are measured.

18. Method according to the preceding claim, **characterised in that** the normal forces acting in the region of the load path (500) on the at least one of the components (3, 5) are measured.

19. Method according to either claim 17 or claim 18, **characterised in that** the values measured are evaluated by means of suitable signal processing methods, in particular by means of frequency and/or time-frequency and/or scale-frequency analysis.

20. Method according to any one of claims 17 to 19, **characterised in that** the two components of the actuator (3, 5) and, optionally, the at least one additional component form a roller bearing (1) having an outer race and an inner race (3, 5) and rolling elements (4), preferably being a spindle drive (201) having an outer race (5) and an inner race (3) formed as a spindle (200), and the normal forces acting axially on the shoulders of the outer race and/or the inner race (51, 31) are measured.

21. Method according to any one of claims 17 to 20, **characterised in that** the normal forces are measured by means of a piezoresistive sensor (7).

22. Method for producing an actuator comprising an integrated condition monitoring system according to any one of claims 1 to 16, the actuator containing at least two components (3, 5) which are movable in relation to one another, each having a first and a second (31, 51) surface region, the two components (3, 5) together with the respective first surface region thereof being arranged relative to one another in such a way that the two first surface regions are in contact with one another or are separated from one another by at least one additional component, **characterised in that** a piezoresistive sensor (7) is attached to at least one of the two components (3, 5) in the second surface region (31, 51) thereof.

23. Use of an actuator comprising an integrated condition monitoring system according to any one of claims 1 to 16, and of the method for detecting and monitoring mechanical irregularities of an actuator and for measuring a load distribution thereon according to claim 17 in control and servo systems, in particular in flight control systems in aircraft, in the field of vehicle control and/or in the field of power generation.

## Revendications

1. Actionneur avec système intégré de surveillance d'état pour la reconnaissance et la surveillance d'irrégularités mécaniques de composants individuels de l'actionneur et/ou pour la mesure d'une répartition de charges (90, 91) sur ces composants, dans lequel l'actionneur contient au moins deux composants (3, 5) mobiles l'un par rapport à l'autre et respectivement dotés d'une première et d'une seconde zone de surface (31, 51), dans lequel les deux composants (3, 5) sont respectivement agencés avec leur première zone de surface de telle sorte que les deux premières zones de surface sont en contact l'une avec l'autre ou sont espacées l'une de l'autre par au moins un composant supplémentaire, dans lequel la seconde zone de surface (31, 51) d'au moins l'un des deux composants (3, 5) présente au moins un capteur piézorésistif (7) comme élément du système de surveillance d'état,
**caractérisé en ce que**
le au moins un capteur piézorésistif (7) est agencé dans le chemin de charge d'au moins l'un des deux composants (3, 5).

2. Actionneur selon la revendication précédente, **caractérisé en ce que** l'actionneur présente au moins deux capteurs piézorésistifs (7).

3. Actionneur selon l'une quelconque des revendications précédentes, **caractérisé en ce que** la seconde zone de surface (31,51) d'au moins l'un des deux composants (3, 5) est en contact au moins par endroits avec au moins un autre élément, dans lequel le capteur piézorésistif (7) est agencé au moins partiellement dans la zone de contact entre la seconde zone de surface (31, 51) et l'autre élément.

4. Actionneur selon l'une quelconque des revendications précédentes, **caractérisé en ce que** les au moins deux composants (3, 5) de l'actionneur sont une bague intérieure (3) et une bague extérieure (5) d'un palier de roulement (1), lesquelles peuvent tourner l'une par rapport à l'autre, et le au moins un composant supplémentaire de l'actionneur est une pluralité de corps de roulement (4), qui sont agencés entre la bague intérieure (3) et la bague extérieure (5).

5. Actionneur selon la revendication précédente, **caractérisé en ce que** le capteur piézorésistif (7) est agencé axialement contre au moins l'un des épaulements de la bague extérieure (51), en particulier complètement ou partiellement entre au moins l'un des épaulements (51) et un boîtier (6), et/ou axialement contre au moins l'un des épaulements de la bague intérieure (31), en particulier complètement ou partiellement entre au moins l'un des épaulements de la bague intérieure (31) et un arbre d'entraînement (2) ou un élément de transition vers l'arbre d'entraînement (2).

6. Actionneur selon l'une quelconque des revendications 4 ou 5, **caractérisé en ce qu'**au moins l'un des épaulements de la bague extérieure (51) et/ou de la bague intérieure (31) présente des capteurs piézorésistifs (7), avantageusement le long du sens périphérique de la bague extérieure (5) et/ou de la bague intérieure (3), avantageusement à intervalles réguliers.

7. Actionneur selon l'une quelconque des revendications 4 à 6, **caractérisé en ce que** la bague intérieure (3) est conçue sous forme de broche (200) et la bague extérieure (5) forme un écrou de broche avec le capteur piézorésistif (7).

8. Actionneur selon l'une quelconque des revendications précédentes, **caractérisé en ce que** le système de surveillance d'état contient au moins un élément de compensation de température, qui est agencé en particulier en dehors du chemin de charge (500), de préférence dans la seconde zone de surface (31, 51) d'au moins l'un des composants de l'actionneur, de préférence dans la zone du capteur piézorésistif (7) ou à proximité de celui-ci.

9. Actionneur selon l'une quelconque des revendications précédentes, **caractérisé en ce que** le au moins un capteur piézorésistif (7) et le au moins un élément de compensation de température sont commutés de telle sorte qu'ils forment un montage en série ou un montage en pont, en particulier un montage en pont de Wheatstone.

10. Actionneur selon l'une quelconque des revendications précédentes, **caractérisé en ce que** le au moins un capteur piézorésistif (7) est conçu sous forme d'au moins un point de capteur dans un revêtement de surface (700) ou **en ce que** le au moins un capteur piézorésistif (7) est un revêtement de surface (700) fabriqué dans un matériau piézorésistif ou contenant un tel matériau.

11. Actionneur selon la revendication précédente, **caractérisé en ce que** le point de capteur et/ou le revêtement de surface (700) fabriqué dans un matériau piézorésistif ou contenant un tel matériau est une couche d'hydrocarbure dopée ou non dopée, qui est éventuellement dopée avec du tungstène, du chrome, de l'argent, du titane, de l'or ou du platine.

12. Actionneur selon l'une quelconque des revendications 10 ou 11, **caractérisé en ce que** le capteur piézorésistif (7) présente des électrodes (701), en particulier sur le côté du point de capteur et/ou du revêtement de surface (700), lequel côté étant opposé à la seconde zone de surface (31, 51) de l'un des composants de l'actionneur, électrodes avec lesquelles le au moins un point de capteur et/ou le revêtement de surface (700) fabriqué dans un matériau piézorésistif ou contenant un tel matériau peu(ven)t entrer en contact et peu(ven)t être relié(s) à une source de tension, en particulier une source de tension constante, ou à une source de courant, en particulier une source de courant constant.

13. Actionneur selon la revendication précédente, **caractérisé en ce que** les électrodes (701) sont conçues sous la forme d'une couche de métal mince, qui est de préférence en chrome, en composés chrome-nickel ou en titane, ou contient au moins l'un de ces matériaux.

14. Actionneur selon l'une quelconque des revendications 12 ou 13, **caractérisé en ce que** respectivement deux électrodes (701) sont agencées à proximité l'une de l'autre, dans lequel une première électrode, qui présente une première zone pour la mesure de la force et une seconde zone pour la mise en contact, est agencée avec la première zone dans le chemin de charge (500) et avec la seconde zone à l'extérieur du chemin de charge, et une seconde électrode pour la compensation de température est agencée à l'extérieur du chemin de charge.

15. Actionneur selon l'une quelconque des revendications précédentes, **caractérisé en ce qu'**une couche d'isolation et/ou de protection contre l'usure (702) est agencée par endroits sur le côté du point de capteur et/ou du revêtement de surface, lequel côté étant opposé à la seconde zone de surface (31, 51) de l'un des composants de l'actionneur, et sur les électrodes (701) agencées dessus, dans laquelle la couche d'isolation et/ou de protection contre l'usure (702) est de préférence fabriquée dans une couche d'hydrocarbure dopée avec du silicium, dopée avec du silicium et de l'oxygène, dopée avec de l'aluminium ou dopée avec du nitrure d'aluminium ou contient une telle couche.

16. Actionneur selon l'une quelconque des revendications précédentes, **caractérisé en ce que** le au moins un capteur piézorésistif (7) est relié par une liaison électrique à une unité d'analyse et une électronique de capteur.

17. Procédé pour détecter et surveiller des irrégularités mécaniques de composants individuels d'un actionneur selon l'une quelconque des revendications 1 à 16 et/ou pour mesurer une répartition de charges sur ces composants, dans lequel l'actionneur contient au moins deux composants (3, 5) comprenant respectivement une première et une seconde zone de surface (31, 51), dans lequel les deux composants (3, 5) sont mobiles l'un par rapport à l'autre et sont respectivement agencés avec leur première zone de surface l'un par rapport à l'autre de telle sorte que les deux premières zones de surface sont au moins par endroits en contact l'une avec l'autre, ou sont espacées l'une de l'autre par au moins un composant supplémentaire,
**caractérisé en ce que**
les forces normales agissant sur au moins l'un des composants (3, 5) pendant le mouvement relatif des deux composants (3, 5).

18. Procédé selon la revendication précédente, **caractérisé en ce que** les forces normales agissant sur au moins l'un des composants (3, 5) dans la zone du chemin de charge (500) sont mesurées.

19. Procédé selon l'une quelconque des revendications 17 ou 18, **caractérisé en ce que** les valeurs mesurées sont analysées au moyen de procédés appropriés du traitement de signal, en particulier au moyen d'une analyse fréquentielle et/ou au moyen d'une analyse temps-fréquence et/ou au moyen d'une analyse échelle-fréquence.

20. Procédé selon l'une quelconque des revendications 17 à 19, **caractérisé en ce que** les deux composants de l'actionneur (3, 5) et éventuellement le au moins un composant supplémentaire forment un palier de roulement (1) avec une bague extérieure et une bague intérieure (3, 5) ainsi que des corps de roulement (4), de préférence un entraînement de broche (201) avec une bague extérieure (5) et une bague intérieure (3) conçue sous la forme d'une broche (200), et les forces normales agissant axialement sur les épaulements de la bague extérieure et/ou de la bague intérieure (51, 31) sont mesurées.

21. Procédé selon l'une quelconque des revendications 17 à 20, **caractérisé en ce que** les forces normales sont mesurées au moyen d'un capteur piézorésistif (7).

22. Procédé pour fabriquer un actionneur avec système intégré de surveillance d'état selon l'une quelconque des revendications 1 à 16, dans lequel l'actionneur contient au moins deux composants (3, 5) mobiles l'un par rapport à l'autre et respectivement dotés d'une première et d'une seconde zone de surface (31, 51), dans lequel les deux composants (3, 5) sont respectivement agencés avec leur première zone de surface l'un par rapport à l'autre de telle sorte que les deux premières zones de surface sont en contact l'une avec l'autre ou sont espacées l'une de l'autre par au moins un composant supplémentaire,
**caractérisé en ce que**
un capteur piézorésistif (7) est positionné sur au moins l'un des deux composants (3, 5) dans leur seconde zone de surface (31, 51).

23. Utilisation d'un actionneur avec système intégré de surveillance d'état selon l'une quelconque des revendications 1 à 16 et du procédé pour détecter et surveiller des irrégularités mécaniques d'un actionneur et pour mesurer une répartition de charges sur cet actionneur selon la revendication 17 dans des systèmes de commande et de réglage, en particulier dans des systèmes de commande de vol d'aéronefs, dans le domaine de la commande de véhicule et/ou dans le domaine de la production énergétique.
